# EUROPEAN PATENT SPECIFICATION

(11) **EP 1 744 428 B1**
(45) Date of publication and mention of the grant of the patent: **27.02.2019**
(21) Application number: 06425293.5
(22) Date of filing: 03.05.2006
(51) Int. Cl.: H01H 9/28, H02H 3/33, H01H 71/66, H02H 3/06, H02H 11/00

(54) **ELECTRICAL APPARATUS FOR CONTROLLING AND RESETTING A CIRCUIT BREAKER**
ELEKTRISCHE VORRICHTUNG ZUR ANSTEUERUNG UND ZUM ZURÜCKSETZEN EINES LEISTUNGSSCHALTERS
DISPOSITIF ÉLECTRIQUE POUR LA COMMANDE ET LE RÉENCLENCHEMENT D'UN DISJONCTEUR

(30) Priority: 17.05.2005 IT MI20050896
(43) Date of publication of application: 17.01.2007
(73) Proprietor: BTICINO S.P.A., Viale Borri, 231 21100 Varese (IT)
(72) Inventor: Fabrizi, Fabrizio, 24122 Bergamo (IT); Re, Marcello, 21040 Venegono Superiore (Varese) (IT)
(74) Representative: Mozzi, Matteo

(56) References cited:
- EP-A- 1 209 712
- EP-A- 1 569 314
- EP-A2- 0 883 148
- US-A- 3 962 611
- US-A- 4 979 070

## Description

The present invention relates to an electrical apparatus to be associated with a safety device to carry out the automatic resetting thereof.

Safety devices (such as, for example, automatic circuit-breakers, ground fault circuit interrupters, automatic ground fault circuit interrupters) fitted in an installation may cause inefficiencies if their action is ill-timed. Tripping is frequent phenomenon, i.e. the ill-timed opening of ground fault interrupters, due to ground leakage currents either resulting from transient surges on the power line (direct or indirect lightning striking) or temporary failure of the insulation.

If the installation place is not guarded, the safety device is not manually closed after it has tripped in a ill-timed manner, thereby severe inefficiency may occur, such as: failure of alarm operation, safety systems, pump systems or switching off of freezers with deterioration of the food contained therein;

These problems have been addressed and partially solved by modules associable with the safety devices, which are able to reset and then automatically close the devices at a preset time after tripping. Particularly, a known reset module comprises an inner kinematism acting on the manual lever of the safety device and a thermal actuator acting on the kinematism when the safety device has tripped, in order that the kinematism actuates the resetting.

Reset modules are known comprising an electronic device therein, which is suitable to detect the installation failure and lock out the reset module by signalling this locked-out condition to the outside. In this locked-out condition, the automatic resetting of the safety device is prevented in the presence.

Document EP 1209712 A1 describes a device for remote control of a modular safety apparatus such as a differential interrupter.

Document US 4,979,070 describes an automatic reset circuit for a Ground Fault circuit Interrupter (GFCI).

Document US 3,962,611 describes electrical circuit means for providing an automatic power restart for unattended electrical equipment.

A drawback with conventional reset modules that are provided with an installation control electronic device is that they do not provide a suitable level of safety to the operator who must act on the installation, also after the safety device has been manually opened.

The object of the present invention is to provide an electrical apparatus for the resetting and control of an installation which overcomes the above-mentioned drawback of conventional modules.

The object of the present invention is achieved by an electric apparatus such as described in the annexed claim 1. Preferred embodiments of said apparatus are described in the dependent claims 2 to 19.

In order to better understand the present invention and appreciate the advantages thereof, some exemplary embodiments thereof will be described below, with reference to the annexed drawings, in which:
- Fig. 1 shows by means of functional blocks an exemplary electrical assembly including a safety device, a control device and a reset module that are provided according to an example of the present invention;
- Fig. 2 shows a perspective view of said electrical assembly in the assembled configuration;
- Fig. 3 is a perspective view of an example of said safety device;
- Fig. 4 schematically shows a circuit board of said control device;
- Fig. 5 schematically shows several electromechanical parts of said control device;
- Fig. 6 is a perspective view of an enclosure of said control device;
- Fig. 7 and 8 show a front perspective view of the inside of said reset module comprising a cover in a first and second positions, respectively;
- Fig. 9 schematically show a mechanical coupling mode between the reset module and a drive lever of said control device;
- Fig. 10 and 11 show a side view and a perspective view of a mechanical coupling element used in said reset module, respectively;
- Fig. 12 and 13 show a rear perspective view of a detail of the inside of said reset module in two different operating positions.

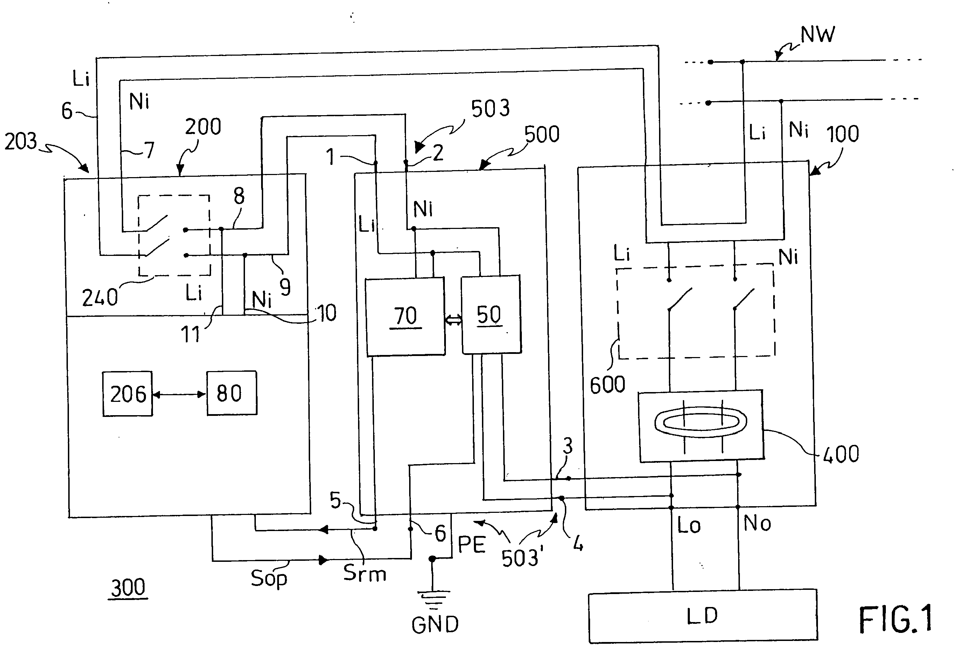

Fig. 1 shows the electrical assembly 300, in the assembled configuration, which comprises a safety electrical device 100 that is operatively associated with a control electronic device 500, which is, in turn, associated with a reset device or module 200.

As illustrated in the diagram in Fig. 1, the safety device 100 is provided with input terminals Li and Ni (such as a phase terminal and a neutral one) for connection to a power network NW and output terminals Lo and No for connection to an external electrical circuit which is outlined in the figure as a load LD (such as a household electrical installation).

The safety device 100 is such as to adopt a closed state in which the load LD is connected to the power network NW and an open state in which the load LD is disconnected from the power network NW.

The safety device 100 can be, for example, one of the following conventional circuit breakers: automatic circuit-breaker, ground fault circuit interrupter, automatic ground fault circuit interrupter. In Fig. 1 a ground fault circuit interrupter has been outlined, which comprises a contact breaker 400 with contacts 600.

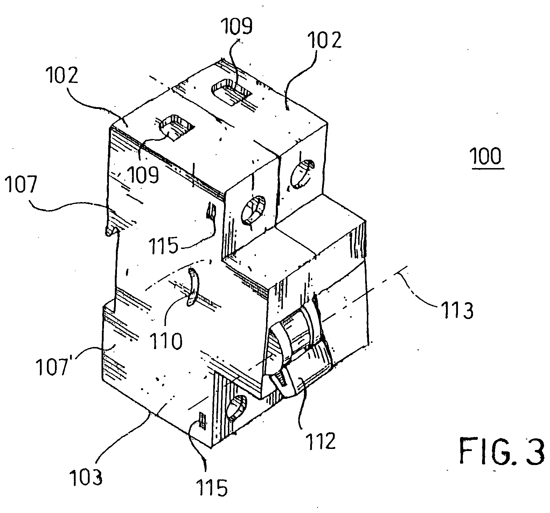

With reference to Fig. 3, the safety device 100 comprises a respective enclosure made of insulating material 107 and a first drive lever 112 (such as a handle rotatable about an axis 113) that can be manually displaced between two different positions to switch the safety device from the closed state to the opened state, and vice versa, in a manual manner. The insulating body 107 houses electro-mechanical means (not shown, as know per se) therein, which automatically cause the opening of the same with the consequent displacement of the first drive lever 112, following the detection of a failure in the load LD such as, for example, a ground leakage current or a short-circuit. Furthermore, this safety device 100 has on a side wall 107' thereof, in a manner known per se, an aperture 110 (seen only in the view from Fig. 3) in which a pivot can be inserted from the outside such as to be coupled with a coupling and releasing mechanism (not shown, as being conventional) housed in the enclosure 107 to cause the switching of the safety device 100. On the side wall 107' there are also formed apertures 115 for mounting to the control device 500.

An upper wall 102 and a lower wall 103 of the safety device 100 are provided with terminals 109 for the input Li and Ni and output Lo and No phase and neutral conductors that are connected to the control device 500.

With reference to Fig. 1, 4, 5 and 6, the control electronic device 500, according to a preferred embodiment, comprises an insulating enclosure body 501, such as including two portions fixable by means of screws or rivets (not shown), which engage within seats 502.

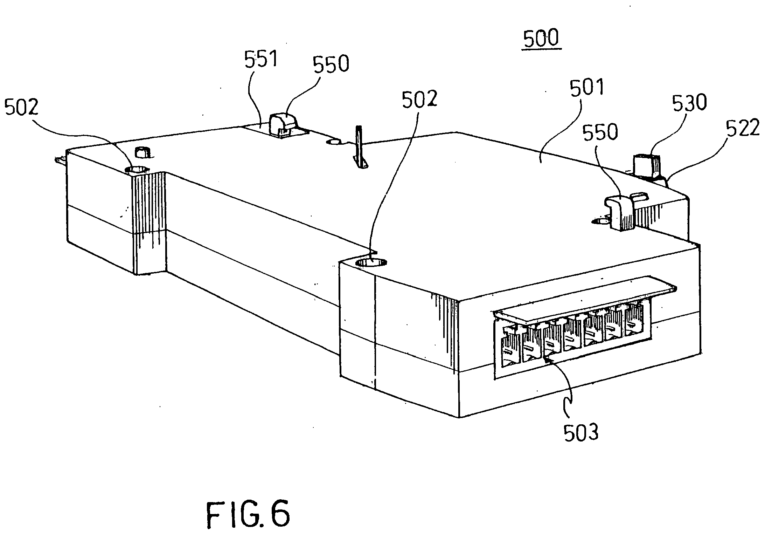

It should be noted that, advantageously, the control device 500 is a module separated from the safety device 100, since the enclosure 501 is independent from the enclosure 107 of the safety device 100. The enclosure 501 of the control device 500 is provided with reversible fixing means allowing the same to be coupled and uncoupled to/from the enclosure 107 of the safety device. These fixing means comprise, for example, clips 550 (Fig. 6) to be inserted in apertures 115 (Fig. 3) being formed in the enclosure body 107 of the safety device 100. One or more of said clips 550 is fixed to a respective support element 551 insertable in a seat of the enclosure 501 and fixable thereto by means of a respective screw.

As may be seen in Fig. 1, the enclosure 501 is provided with a first plurality of terminals 503. As will be better explained below, two terminals 1 and 2 of the plurality 503 are connected to the power network NW, i.e. the phase Li and neutral Ni input conductors, by means of the reset module 200. Furthermore, the enclosure 501 is provided with a second plurality of terminals 503' having two terminals 3 and 4 for connection to the phase Lo and neutral Lo conductors, which output from the safety device 100 and thus connect the control device to the load LD. Advantageously, a terminal of the second plurality of terminals 503' is connected by means of a lead PE to a safety circuit (i.e. the earth), with which the load may be provided.

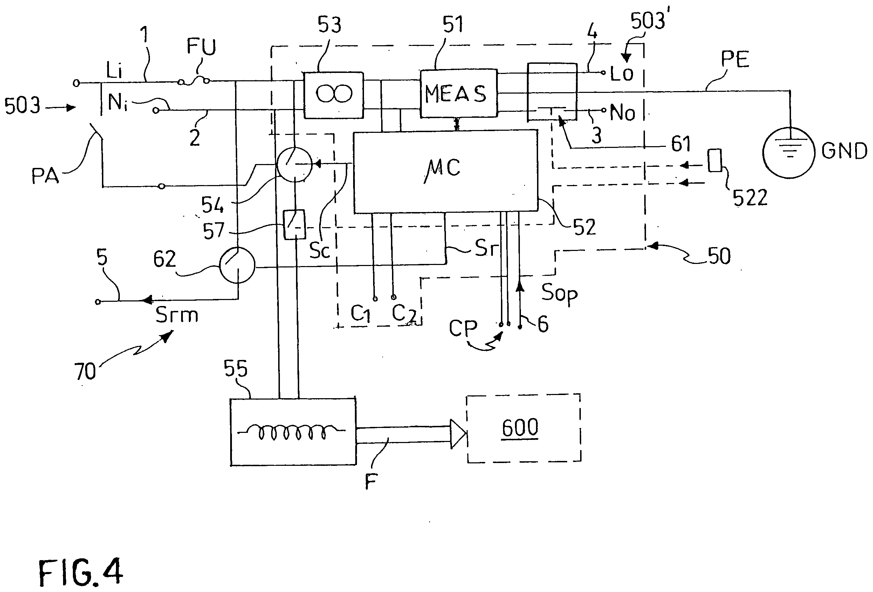

The terminals 503 and/or 503' can also be used to send suitable command signals to the reset module 200, which are transmitted by remote control units (by means of terminals C1 and C2 illustrated in Fig. 4), either to close the safety device 100 or monitor the load LD. Particularly, the second plurality of terminals 503' comprises a driving terminal 5 for a reset signal to be sent to the reset module 200 and a tripping detection terminal 6 to receive a signal Sop that opening (tripping) has occurred from the reset module 200 (Fig. 1 and 4).

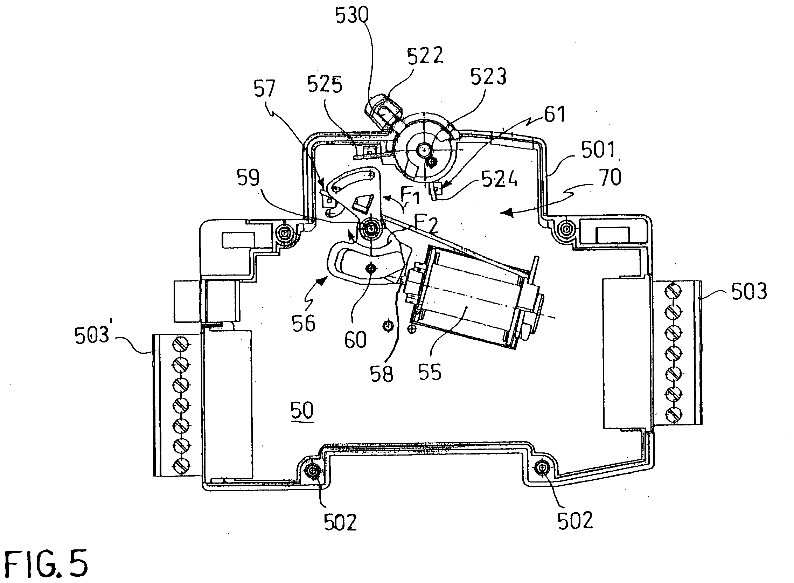

According to the example described herein, the control device 500 is capable of detecting an operative state of the load LD and consequently control the reset module 200. In greater detail, the control device 500 comprises control electronic means 50 (Fig. 5 and 4) connected to the load LD and being such that either a failure condition or normal condition of the load is detected by activating, in the latter case, a reset-enable signal Sr intended to activate the resetting (i.e. the closure) of the safety device 100 in the case where the latter has opened. Optionally, the control electronic means 50 are also capable, when an actual failure is detected, to generate a control signal Sc, starting from which the manual closure of the safety device 100 will be inhibited.

Furthermore, the control device 500 is provided with actuating means 70 (Fig. 1 and 4) that are intended to receive the reset-enable signal Sr, and when provided, the control signal Sc and act on the reset module 200 and safety device 100.

The control electronic means 50 will be considered first, which are shown in Fig. 4 and preferably provided on a printed circuit board that is completely housed within the enclosure 501. This circuit board 50 comprises a check electronic block 51 (MEAS) communicating with a central block or unit 52 (µC) managing the entire board 50 and, advantageously, a power supply device 53.

The power supply device 53 is connected to the input phase and neutral conductors Li and Ni to receive alternating current (such as, of 50 Hz frequency) from the network NW and includes, for example, a rectifier circuit that converts it to direct current and provides the circuit board 50 with a suitable voltage value. Preferably, this power supply device 53 is provided with a safety transformer allowing the load LD to be suitably insulated from the power network NW. Advantageously, a fuse FU is provided on the input phase lead Li to protect the circuit board from high currents from the network NW, which may damage it.

The check block 51 and central unit 52 are connected to the output of the power supply device 53.

The check block 51, which can be provided with technologies known in the field, is connected to an output of the load LD (by means of the conductors Lo and No, terminals 3 and 4) and is capable of carrying out measurements of electrical parameters of the load LD.

The check block 51 is further capable of detecting whether the safety device 100 has turned to the open state, because it detects the lack of electric voltage on the load LD. When this situation occurs (the safety device 100 is open), the check circuit (driven by the central unit 52) starts one or more measurements on the load LD to evaluate whether it is experiencing an actual failure condition or if the safety device 100 has been opened due to a temporary cause (such as due to an ill-timed tripping of the safety device).

For example, the check block 51 is capable of carrying out a direct current measurement of the impedance between phase lead Lo and neutral lead No of the load LD. Advantageously, when the safety circuit is provided (grounding GND), the check block 51 by means of the lead PE can carry out (alternatively or in addition to the above measurement) an alternating current measurement (at a suitable frequency) of impedance between the output phase and neutral conductors Lo and No and the safety circuit. Furthermore, the control device can carry out a measurement of the leakage current by applying a voltage, between the output phase Lo and output neutral No conductors and the safety circuit, respectively.

These measured values of the impedances or leakage current can be provided in the form of corresponding data to the central unit 52.

The central unit 52 (for example, an integrated microcontrollore) receives these data and compares them with reference electrical parameters that have been previously stored therein. When the impedance or current values resulting from the comparison are consistent with a condition of normality of the load LD, the central unit 52 activates the reset-enable signal Sr. On the contrary, when the impedance or current values resulting from the comparison are consistent with a failure condition, the reset-enable signal Sr is not activated, thereby the resetting of the safety device 100 by the reset module 200 is inhibited. Furthermore, when a failure condition has been detected, the central unit 52 can activate the command signal Sc which, as will be seen below, can activate a release device that prevents the safety device 100 from being manually closed.

According to a preferred embodiment of the invention, the check block 51 is also capable of carrying out a measurement of the maximum electrical voltage provided by the power network NW and sending a corresponding data to the central unit 52 that provides to activate the command signal Sc if the measured voltage exceeds a maximum reference value. This measurement of the maximum voltage is particularly useful for protecting single-phase users connected in three-phase installations, because in these installations the interruption of the neutral implies that an overvoltage exists between the phases and the neutral as a function of the type of single-phase loads that are distributed between the neutral and phases. The interruption of the neutral can be due to accidental causes (opening of the main switch pole, interruption of conduits, interruption of cable joints, or the like) and the resulting overvoltage is the cause of considerable damages to the electrical equipment.

Advantageously, the central unit 52 also acts as an interface with the user and is equipped with a communication port CP, such as of the serial type, for the remote monitoring of the load LD and exchange of information concerning the measurements that have been carried out.

Reference will be now made to the above-mentioned actuating means 70, which as said above, are intended to receive the reset-enable Sr and command Sc signals (which are activated by the central unit 52) and act on the reset module or safety device 100.

With reference to the reset-enable signal Sr, the actuating means 70 comprise a circuit-breaker 62 (for example, a conventional circuit-breaker, such as a TRIAC) which is powered by said terminal 1, and can be driven by said signal Sr. When the reset-enable signal Sr is activated, the circuit-breaker 62 is closed such that a corresponding actuating signal Srm is sent to the terminal 5 that is also shown in Fig. 1. This actuating signal causes the activation of the reset module 200, which provides to close the safety device 100 in an automatic (i.e. not manual) manner. When the reset-enable signal Sr is deactivated (actual failure condition), the circuit-breaker 62 remains opened, thereby the actuating signal Srm is not generated, and the reset module 200 is held in a locked-out condition according to which the automatic closure of the safety device 100 is not carried out.

According to a particularly advantageous embodiment, the central unit 52 can be arranged to store a number and respective time intervals of automatic opening events and consequent resetting of the safety device 100, and to maintain the reset-enable signal Sr deactivated when two of these events occur at a shorter time interval than a preset time.

With reference to the optional command signal Sc, the actuating means 70 can comprise a release device to be mechanically connected to the safety device 100 such that the switching from the opened state to the closed state is inhibited when the command signal Sc indicates that a failure condition of the load LD has been detected.

In greater detail, this release device comprises a first contact-breaker 54, an energizable coil actuator 55 (for brevity, the "release coil" herein below) and a rotating rocker body 56 (Fig. 4 and 5).

The first circuit-breaker 54 is preferably an electronic circuit-breaker (for example, a TRIAC) connected to the network NW by means of the terminal 1 and having an output connected (by means of a first contact 57) to the release coil 55. The first circuit-breaker 54 can be driven by means of the above command signal Sc and, for example, is closed when said command signal is activated.

The release coil 55, when electrical current flows therethrough (i.e. when both the first circuit-breaker 54 and first contact 57 are closed), generates such a magnetic field that a rod-like element 58 cooperating with the rocker body 56 is translated.

As illustrated in Fig. 5, the rocker body 56 is free to perform limited rotations about a pivot 59 and supports a motion transmission element, such as particularly, a pin 60. This pin 60 projects outside the enclosure 501 of the control device 500 for insertion in the aperture 110 (Fig. 3) of the safety device 100. The pin 60 is such as to be engaged with the release mechanism included in the enclosure 107 of the safety device 100, thereby causing the switching of the latter due to the rotation of the rocker body 56.

Preferably, the control device 500 further comprises a second drive lever 522 that can be rotated about a pivot 523 and held, when no further action has to be taken, in the closed position together with a helical spring wound on the pivot 523 and having ends 524 and 525. The end 524 of the spring is a part of a contact 61, which, when closed, (i.e. the contact 61 being in the position of Fig. 5 and the safety device 100 being in the opened state) connects an output terminal of the check block 51 to the output neutral lead No, thereby allowing said measurements to be taken.

The second drive lever 522 is mechanically connected to the first drive lever 112 of the safety device 100, such as by means of a projecting element 530 of the second lever 522 which inserts within a side cavity of the first lever 112.

The control device 500 is advantageously provided with a front push-button (not shown), that can be accessed from the outside, which allows deactivating/activating the action of the command signal Sc. Furthermore, different devices signalling the condition of the control device 500 can be provided. For example, the enclosure 501 of the control device 500 is provided with a first LED (Light Emitting Diode) signalling a short-circuit and a second LED signalling a ground failure, which are not shown but can be seen although they are covered by the cover of the reset module. A sound signal device (to be activated by the central unit 52, similar to the LEDs) may also be provided, which warns the user about the presence of a permanent failure. This sound signal can be useful when the control device 500 is installed in a junction box located in a decentred area. The sound signal can be silenced by acting on the front push-button PA or eliminating the failure condition. The sound signal can be used to identify the failure occurring on the installation (i.e. according to the example, the load LD), by removing the plugs of the users or sectioning the parts of the installation until the failure area is identified, and the sound signal turns off. The central unit 52 is preferably capable of storing the failure signallings such that, even in case of temporary absence of voltage from the power network NW, the failure is signalled when the voltage is restored.

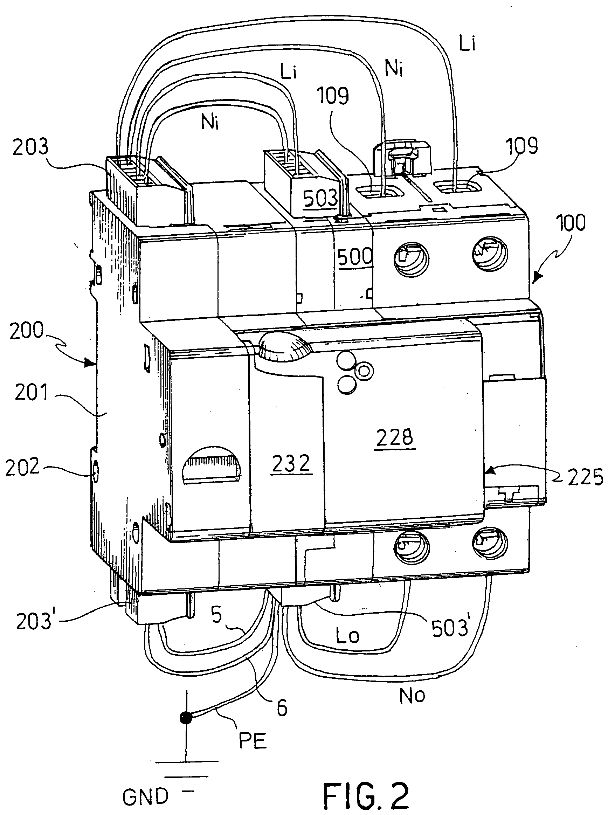

The reset module 200 should be now considered, such as illustrated in Fig. 1 and Fig. 2. The reset module 200 comprises an insulating enclosure body 201, for example, comprising two portions to be fixed by means of screws passing through through holes 202. A side of the enclosure 201 is provided with a plurality of terminals 203 for connecting the reset module 200 to the power network NW. For example, two input terminals 6 and 7 of the plurality 203 are connected to the input phase Li and neutral Ni conductors of the safety device 100. The terminals 203 can be also used to send suitable command signals to the reset module 200, which are transmitted by remote control units, in order to close the safety device 100.

As schematically illustrated in Fig. 1, the input terminals 6 and 7 of the reset module 200 are electrically connected to corresponding input terminals of sectioning means 240 having two output terminals 8 and 9, which are, in turn, connected to supply terminals 10 and 11 of the inner equipment of the reset module 200 and said terminals 1 and 2 of the control device 500. As will be described below with reference to a particular embodiment, the sectioning means 240 can be activated during a manual opening of the safety device 100 and are such as to switch from a closed configuration to an opened configuration, and vice versa. In the closed configuration, the sectioning means 240 connect the input terminals 6 and 7 to the output terminals 8 and 9 and thus connect both the inner equipment of the reset module 200 and the control device 500 to the safety device 100 and, by means of the latter, to the power network NW.

In the opened configuration, the sectioning means 240 disconnect the input terminals 6 and 7 from the output terminals 8 and 9 and thus disconnect both the inner equipment of the reset module 200 and the control device 500 from the safety device 100 and, by means of the latter, from the power network NW. To the purposes of the present invention, by the word "sectioning", when used with reference to the means 240, is meant that the latter are suitable to vacuum-interrupt the electrical conduction between the input 6 and 7 and output 8 and 9 terminals. In other words, the means 240 are capable of providing the interruption of the conduction when the safety device 100 is in the opened state, i.e. the output terminals 8 and 9 are not electrically connected to the terminals Lo and No being connected to the electrical circuit LD, due to the opening of the interruption block 600 (Fig. 1).

Particularly, the sectioning means 240 can comprise a conventional circuit-breaker (described below) suitable to section the power network NW and the electrical circuit LD preferably in accordance with safety device product standards, such as the device 100.

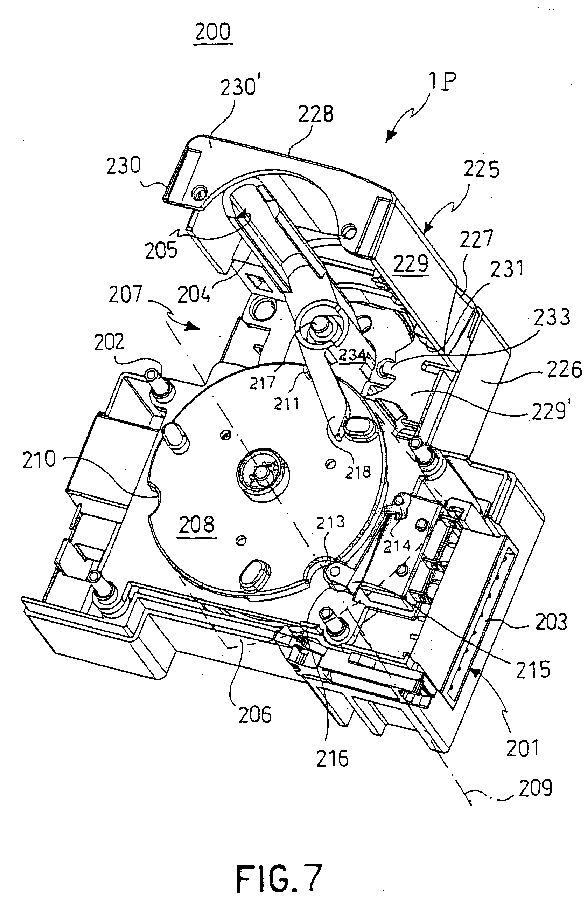

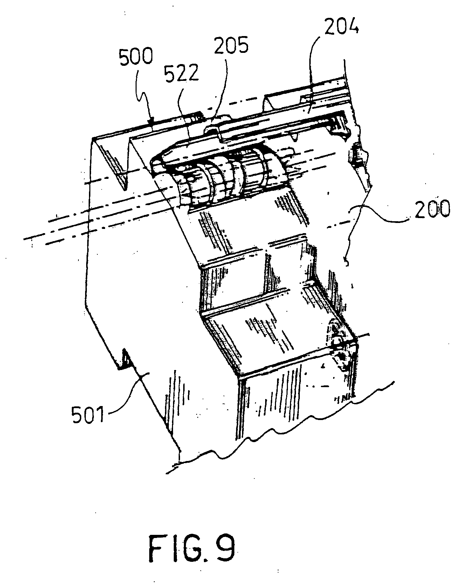

The modes with which the sectioning means 240 can be activated will appear from the description below of an example of the reset module 200. As may be seen in Fig. 7-9, the reset module 200 is equipped with a rotating bar 204 parallel to the axis of rotation 113 of the first drive lever 112 and rear wall of the enclosure 201. In the rotating bar 204 there is formed a longitudinal channel 205 in which the second drive lever 522 of the control device 500 (Fig. 9) and the first drive lever 112 of the safety device 100 can be inserted.

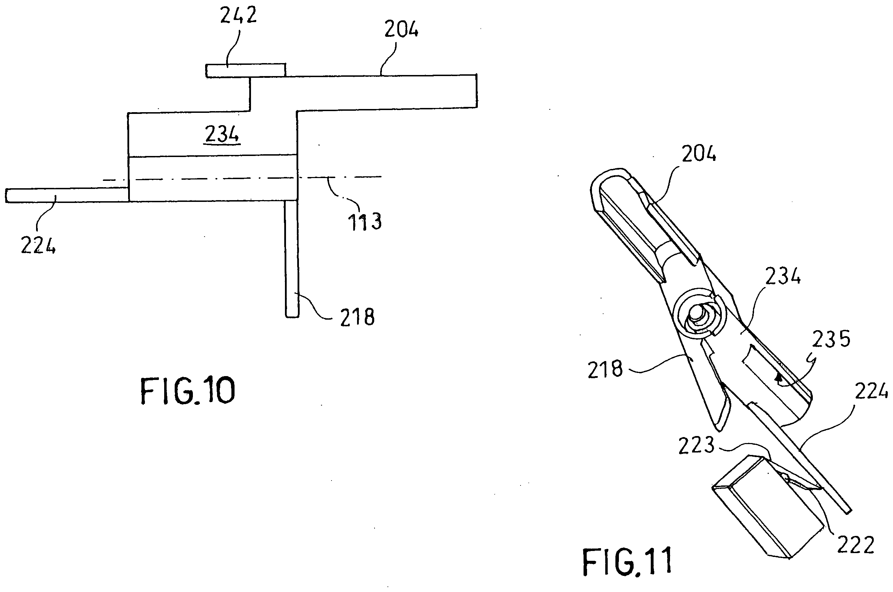

The first and second drive levers 112 and 522 are slidable within channel 205 in the same direction as the axis 113, such that the electrical assembly 300 can be mounted and such that the drive lever 112 results integral in the rotation with the bar 204. The bar 204, which can be also seen in Fig. 10 and 11, is integral with a rotating body 234 having a substantially cylindrical shape, which is hinged on a pivot 217, of axis 113, from which a first moving rod 218 extends orthogonal to the axis 113.

The reset module 200 comprises automatic actuating means capable of causing the resetting of the device, i.e. causing the same to switch from the opened state to the closed state, and optionally causing also the opening thereof. Preferably, these automatic actuating means include a reversible synchronous electric motor 206 (represented with a dotted line in Fig. 7) which is coupled to the bar 204 by means of a drive mechanism 207. Particularly, a disk 208 is connected to the motor 206 such as to be rotated about a further axis 209 parallel to the axis 113.

A side wall of the disk 208 is provided with recesses, such as three recesses 210-213 being arranged such as to form 120° angles in the middle of the disk 208. In the vicinity of the disk 208 there is arranged a first microswitch 214 having a leaf spring 215 (or other equivalent elastic means) associated therewith, which ends with an idle wheel 216 that is free to rotate about an axis parallel to the further axis 209. This first microswitch 214 acts as a limit switch and opens thus interrupting the power supply to the motor 206 and, accordingly, the rotation of the disk 209 when the idle wheel 216 is within one of the recesses 210-213.

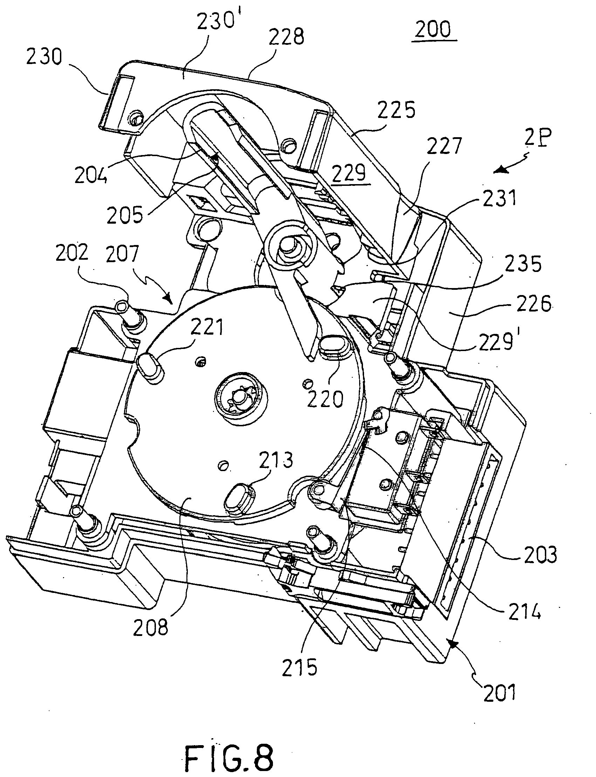

According to the exemplary embodiment of the invention as represented in the figures, the disk 208 is mechanically coupled with the first rod 218 by means of a plurality of relieves, such as three relieves 219-221 (the reference numbers of these relieves have been designated, for clarity, only in Fig. 8). During the rotation of the disk 208, the relieves 219-221 are suitable to engage the first rod 218, which extends above the disk 208 only when it is in the position corresponding to the opened state of the safety device 100, thereby causing the bar 204 to rotate in the opposite direction relative to the rotation of the disk.

The enclosure 201 of the reset module 20 is also provided with a second microswitch 222 (shown in Fig. 11-13) having a respective leaf-spring 223 intended to be biased by a second rod 224, integral with the rotating body 234 and such as to extend, in the example illustrated herein, parallel to the axis 113, in the opposite direction relative to the bar 204. The second microswitch 222 is sensitive to the "tripped" condition of the safety device 100 and allows sending the opened signal Sop (Fig. 1 and Fig. 4) to the central unit 52 of the control device 200. It should be observed that the central unit 52 activates the reset-enable signal Sr only without failure conditions and if it has received the opened signal Sop.

Advantageously, the reset module 200 is further equipped with a cover 225 coupled with the enclosure 201 such as to be manually moved relative to the enclosure. Particularly, the cover 225 is coupled with the respective enclosure by means of guide means allowing the cover to slide (preferably, along an axis orthogonal to axis 113) between a first position 1P and a second position 2P.

In the first position 1P (illustrated in Fig. 7), the cover 225 is aligned with a side wall 226 of the enclosure 201. Depending on the particular operating condition, in the first position 1P, the bar 204 can be in the "lowered" position corresponding to the open state (such as in the particular case of Fig. 7), or it can be in a "raised" position, corresponding to the closed state of the safety device 100.

In the second position 2P (Fig. 8), the cover 225 is misaligned relative to the side wall 226 of the enclosure 201. As will be explained below, when the cover is in the second position 2P, the bar 204 can be only in the "lowered" position (as illustrated in Fig. 8), corresponding to the opened state of the safety device 100. To cause the sliding movement between the first and second positions and vice versa, the cover 225 can be manually gripped and advantageously has an ergonomic recess 227 that facilitates this manual operation.

The cover 225, which is made of an electrically insulating material, comprises a front wall 228 (Fig. 2), an upper wall 229, a lower wall 230, and an outer side wall 230' and an inner side wall 229' (illustrated in Fig. 7 and 8). This cover 225 further extends past the enclosure 201 such that, when the reset module 200 is assembled to the control device 500 and safety device 100, it covers both the second drive lever 522 and the first drive lever 112, thereby protecting them and preventing any manual contact.

The cover 225 is such as to engage the bar 204 (or the first 112 or second 522 drive levers) such as to cause, by sliding from the first 1P to the second 2P position, the rotation of the bar 204 (and the drive lever 112) with consequent switching of the safety device from the closed to the opened state. Particularly, to the purpose, the cover 225 is provided with an engaging element 231 extending inside the cover to abut against the bar 204 and cause the rotation thereof, together with the drive lever 112. According to the example of Fig. 7 and 8 this abutment element 231 is embodied by a projection provided inside the upper side wall 229 such as to pull the bar 204 (at least to half the travel thereof) during the sliding of the cover 225.

Advantageously, the cover 225 comprises a door 232 to be opened/closed (Fig. 2) which allows access to the bar 204, and particularly to a handle 242 (Fig. 10) integral with the bar, in order to rotate the same and bring the safety device 100 from the opened to the closed state, when the cover is in the first position 1P and when the automatic closure provided by the reset module 200 has been inhibited.

Preferably, the reset module 200 includes locking means that inhibit the raising of the bar 204 and thus the manual closure of the safety device 100, when the cover 225 is in the second position 2P of Fig. 8. Particularly, these locking means are associated with the cover 225 and are embodied by a projection 233 (seen in Fig. 7 and 8) protruding from the inner side wall 229' such as to be inserted in an aperture 235 (indicated with the numeral reference only in Fig. 7) being formed in the rotating body 234. When the cover 225 is caused to slide from the first 1P to the second 2P position, the projection 233 is inserted in the slot 235 of the rotating body 234, thereby the rotation of the bar in the opposite direction is inhibited. If the cover 225 is moved from the second position back to the first position, the projection 233 is then disengaged from the slot 235 and the bar 204 can be rotated to close the safety device.

Advantageously, the reset module 200 is provided with a reset activation/deactivation device 80 (schematically illustrated in Fig. 1). Preferably, this activation/deactivation device comprises a conventional operating relay of the motor 206 or is a power supply terminal of the motor 206. This activation/deactivation device 80 can receive the actuating signal Srm (corresponding to the phase voltage Li) sent by the control device 500 to carry out the automatic closure of the safety device 100 (the cover being in the position 1P) The actuating signal Srm will cause, for example, the closure of the operating relay 80 of the reset module 200, such that the motor 206 is powered and the body 234 is rotated along with the first drive lever 112 of the safety device 100.

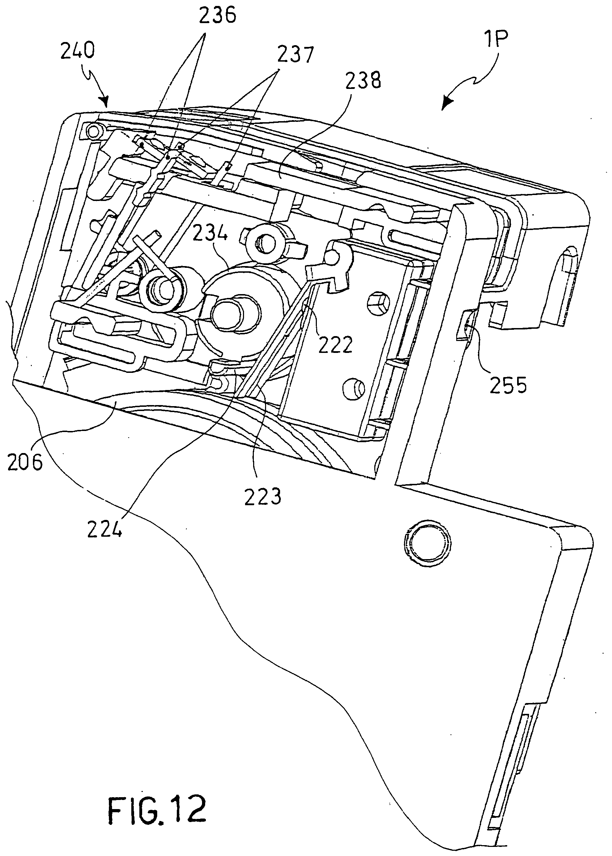

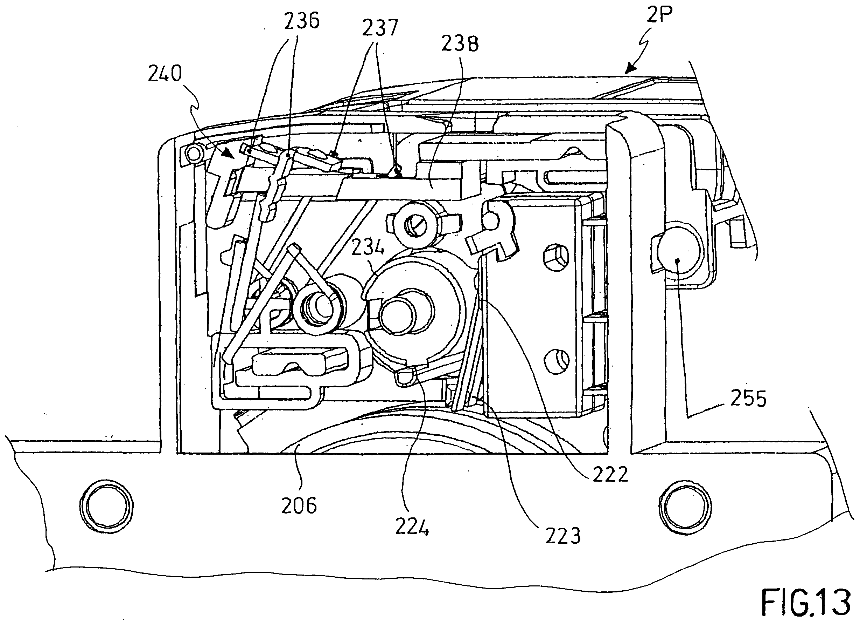

With reference to a possible structure of the sectioning means 240 schematically shown in Fig. 1, reference should be made to the two figures 12 and 13.

The sectioning means 240 comprise fixed contacts 236 and moving contacts 237. The moving contacts are brought from the opened (Fig. 12) to the closed (Fig. 13) configuration, and vice versa, by means of engagement with a framework structure 238 that moves integrally with the cover 225.

When the moving contacts 237 are separated from the fixed 238 ones (as in Fig. 13) the motor 206 is disconnected from the power network NW thereby preventing the automatic resetting of the safety device 100. Furthermore, this sectioning disconnects the power network NW from the electrical circuit LD, despite the provision of the control device 500 connected to the circuit LD. The connection to the power network NW is activated again when the cover 225 is moved in the first position with the consequent closure of the circuit-breaker 240 (Fig. 12).

It should be observed that, for clarity purposes, the electrical wires of the synchronous motor 206 and the wires connecting the first microswitch 214 to the second microswitch 222, or the above-mentioned activation/deactivation device 80 have not been shown in the figures. The electrical connections of these circuit-breakers appear from the above description of their operation.

With reference to the mounting of assembly 300, the reset module 200 (which may have, for example, a size equal to two DIN modules) is structurally coupled with the control device 500 (having, for example, the width of an individual DIN module), for example, by means of clips to be inserted in apertures provided in the enclosure body 501 of the control device 500. Furthermore, the clips 550 (Fig. 6) of the control device 500 are inserted in the apertures 115 (Fig. 3) of the safety device 100.

Advantageously, the cover 225 can be adapted such as to extend and cover the front surface of the control 500 and safety 100 devices, whatever the standardized width of the devices. To the purpose, additional covering elements (not shown) are provided to be (removably) fittingly fixed (and preferably with screws) to the outer side wall 230' of the cover 225 to increase the size thereof.

Furthermore, as illustrated in Fig. 12 and 13, the cover 225 can be provided with a through hole 255 for a padlock to be applied in the second position 2P, such that unauthorized users are prevented from causing the cover 225 to slide to the first position.

With reference to the operation of the electrical assembly 300, the following operative steps will be now described: automatic opening, automatic closure, manual opening and manual closure.

The safety device 100 is initially closed and the cover 225 is in the first position 1P, and the bar 204 is raised (unlike what is shown in Fig. 7). In this case, the check block 51 of the control device 500 detects that the voltage is present on the load LD and arranges itself in a rest condition.

In the automatic opening, starting from the safety device 100 being in the closed state an event may occur (leakage current or a short-circuit) causing the opening thereof. In this case, the drive lever 112 rotates and pulls the bar 204 therewith thereby causing the body 234 to rotate. The cover 225 remains in the first position 1P, but the rotation of the body 234 integral with the second rod 224 causes the switching of the second microswitch 222. The second microswitch 222 causes the transmission of the opened signal Sop (Fig. 1 and Fig. 4) to the central unit 52 of the control device 500.

Following the opening, the check block 51 of the control device 500 does not detect the voltage on the load LD and activates, automatically and under the management of the central unit 52, the control of the state of load LD. The check block 51 then carries out either all or some of the above measurements (impedances or leakage currents) to define the corresponding electrical parameters. These electrical parameters are then provided to the central unit 52 that (by running a pre-stored software) compares with reference values, which are set by the current standards, for example. This condition corresponds to Fig. 7, in which the second drive lever 522 is seen lowered and the contact 61 is closed.

If, following this comparison, the central unit 52 identifies one or more anomalous values of the electrical parameters, it believes that an actual failure has occurred and does not activate the reset-enable signal Sr, and thus does not close the circuit-breaker 62. Therefore, in a failure condition, the automatic closure of the reset module 200 is not commanded, thereby the motor 206 of the reset module is maintained deactivated.

According to an optional operating mode, when a failure is detected, the command signal Sc is activated, which closes the first electronic circuit-breaker 54. Furthermore, the central unit 52 can activate the above-mentioned signalling devices. When a user closes the safety device 100 by acting manually on the first drive lever 112, the mechanism inside the safety device 100 by means of the pin 60 causes the rotation of the rocker body 56 (arrow F1 Fig. 5) which causes the first contact 57 to close.

In this condition, the release coil 55 is powered by the network NW, as both the first circuit-breaker 54 and first contact 57 are closed (see Fig. 4). The release coil 55 is rapidly powered such as to cause, by means of the rod-like element 58, the rotation of the rocker body 56 in the opposite direction.

This rotation of the rocker body 56 (arrow F2) moves the pin 60 such that the safety device 100 is rapidly reopened, thereby preventing the latter from being manually closed and preventing that, in this attempt of closure (carried out in the presence of a failure) the power contacts (block 60) of the safety device 100 close by causing a short-circuit current or ground failure to flow. In Fig. 4, the interaction between the release coil 55 and the contacts of the circuit-breaker 600 is symbolically schematized with an arrow F.

Furthermore, it should be noted that in the opened state, the indication ON/OFF that is normally written on the drive lever of the safety devices is not visible, because it is hidden by the (preferably, opaque) cover 225. For example, the reset module 200 may be provided with a window 241 (Fig. 2) from which one of two alternative indications I-ON and I-OFF can be seen. The indication I-ON, seen through the window 241 following an automatic opening, indicates that the reset module is in the active state.

In the case where, following said automatic opening, the measurements and processing carried out by the circuit board 50 lead to the conclusion that the tripping of the safety device 100 has been ill-timed (absence of failure), the central unit 52 (informed of the tripping, also by the opened signal Sop) activates the reset-enable signal Sr. The reset-enable signal Sr closes the circuit-breaker 62 which activates the actuating signal Srm acting on the activation/deactivation device 80, thereby causing the motor 206 to be powered and i.e. activating the automatic closure.

For the automatic closure of the safety device 100, the synchronous motor 206 (powered also due to the position of the second circuit-breaker 222) causes the disk 208 to rotate (for example, in the counter-clockwise direction, with reference to Fig. 7). The rotation of the disk 208 causes one of the relieves 219-222 to act on the first rod 218 thereby causing the bar 204 and the first drive lever 112 to rotate such that the safety device 100 is moved to the closed state. The first microswitch 214 of Fig. 7 and 8 is opened, after one-third of revolution, the power supply to the motor 206 being thus interrupted.

With reference to the manual opening, an initial condition is considered where the safety device 100 is in the closed state. The manual opening can be carried out by directly acting on the cover 225 (particularly, on recess 227), which is caused to slide and brought from position 1P to 2P. During this step, the abutment element 231 acts on the bar 204 causing the same to rotate, and the consequent opening of the safety device 100. It should be noted that the Fig. 7 relates to a condition in which the cover 225 is caused to slide after an automatic opening has occurred and thus the element 213 does not appear abutted against the bar 204.

Advantageously, by moving the cover 225 to the second position 2P, due to the projection 233 being inserted in the slot 235 of the body 234, a blockage of the bar 204 is caused, which bar cannot be rotated to close the safety device 100.

Furthermore, while the cover 225 is sliding, the moving contacts 337 (that are engaged with the movable frame 238) are moved away from the fixed contacts 236 of the circuit-breaker suitable for the sectioning 240, thereby the power supply to the reset module 200 and control device 500 is interrupted.

For example, in the second position following the manual opening, the window 241 will indicate the wording I-OFF to indicate the opened state but also that the resetting, either manual or automatic, is inhibited. The wordings I-ON and I-OFF are reported, for example, on a suitable portion of the cover 225 which slides below the windows 241.

Following a manual opening, an automatic closure can be carried out, which is provided by simple manoeuvres. Firstly, the cover 225 must be brought back to the first position 1P by causing the projection 233 to disengage from the slot 235 of body 234. This manoeuvre leads to the closure of the circuit-breaker suitable for the sectioning 240 such that both the reset module 200 and the control device 500 are restored to operation. If the control device 500 does not detect any failure, it controls the reset module to carry out the automatic closure.

In the particular case where the control device is disabled from operation by means of the front push-button provided to this purpose, then a manual closure can also be carried out. The cover 225 must be brought back to the first position 1P by causing the projection 233 to be disengaged from the slot 235 of the body 234. Then, the door 232 is opened (for example, manually) such as to gain access to the handle 242 which is then manually rotated to close the safety device 100. The door 232 can be advantageously provided with an elastic element or other means causing the same to close again.

The teachings of the present invention are particularly advantageous.

A relevant advantage is due to the provision of the circuit-breaker suitable for the sectioning 240 which ensures that after the power contacts of block 600 have been opened (automatic opening of the safety device 100), a connection cannot be established between the power network NW and the load LD via the circuit board 50 which is connected to the load. This allows operating on the load LD, for example, to repair a failure in total safety.

Furthermore, it will be noted that the manual opening of the device 100 associated with the reset module 200 is particularly advantageous, since it can take place with a single manoeuvre (i.e. by acting only on cover 225 without having to remove the same to gain access to the first lever 112) and in total safety, since the cover is made of an insulating material and the drive lever 112 is not accessible.

As the mechanical lock of the bar 204, when the cover is in the second position 2P, can be removed only by bringing the cover 225 to the first position 1P, this prevents any inadvertent manual resetting. The fact that the signalling of the opened state (I-OFF, at window 232) is provided only when it is ensured that the automatic resetting is inhibited makes the inventive assembly particularly safe.

Another advantage of the electrical assembly 300 described by way of example is that it employs a synchronous motor which ensures the resetting after a few seconds from opening thereby being much faster than the known module, which uses a thermal actuator before activating the resetting.

It should be observed that using a control device 500 provided in the form of an independent module has the advantage that it can be structurally coupled with several safety devices or other types of electrical apparatuses (having a standardized shape). For example, with already installed electrical switchboards, due to the versatility of the inventive control device, the safety device can be implemented to the control device, with clear consequences on cost reduction. In addition, due to the modularity of the inventive control device, there is no need to modify and complicate either the structure of the known safety devices or the manufacturing techniques therefor.

Other relevant advantages relate, for example, to the use of the safety transformer and the possibility of providing a maximum voltage protection. Furthermore, the following advantageous aspect are reported:
- the measurement carried out on the installation (load LD) by means of the safety conductor PE allows using the control device 500 in phase-to-phase and phase-to-neutral systems;
- the exclusion of the check concerning the ground failure current can be carried out simply by avoiding to connect the safety conductor PE;
- the control device of the invention can be also used for the remote release function.

Obviously, to the electrical assembly according to the present invention, those skilled in the art, aiming at satisfying contingent and specific requirements, may carry out a number of modifications and variations, all being however contemplated within the scope of protection of the invention, as defined in the annexed claims.

## Claims

1. An electrical apparatus (200, 500) associable with a safety device (100), said safety device being suitable to be closed/opened to connect/disconnect, an electrical circuit (LD) to/from a power network (NW), respectively, the electrical apparatus comprising:
- a reset device (200) connectable to the power network for the automatic closure of the safety device (100),
- a control device (500) supplied by said power network by means of the reset device (200) and connected to said electrical circuit (LD) to detect an operative state thereof and control the reset device,
the reset device (200) comprising:
sectioning means (240) that can be activated during a manual opening of the safety device (100) to be switched from a closed to an opened configuration, in which an inner equipment of the reset device and the control device are disconnected from the power network,
an enclosure (201) and an insulating cover (225) coupled with the enclosure (201) such as to be manually moved relative to the enclosure by sliding between a first position (1P) and a second position (2P),
a rotating body (234) and a rotating bar (204) including a longitudinal channel (205) in which a first drive lever (112) of the safety device (100) can be inserted so that the first drive lever is integral in the rotation with the bar (204),
automatic actuating means (206) coupled to the bar (204) for rotating the bar (204) to cause the safety device (100) to switch from a opened state and a closed state;
the insulating cover (225) comprises:
a door (232) which allows access to the rotating bar (204) in order to manually rotate the bar and bring the safety device (100) from the opened to the closed state, when the insulating cover is in the first position (1P),
a projection (233) to be inserted in a slot (235) of the rotating body (234), when the insulating cover (225) is caused to slide from the first (1P) to the second (2P) position, to inhibit the rotation of the bar (204) in the opposite direction, said projection (233) being disengaged from the slot (235) when the insulating cover (225) is caused to slide from the second (2P) to the first (1P) position, so that the rotating bar (204) can be rotated by the automatic actuating means to close the safety device,
wherein, the insulating cover (225) is provided with a through hole (255) for a padlock to be applied in the second position (2P), such that unauthorized users are prevented from causing the insulating cover (225) to slide to the first position (1P).

2. The electrical apparatus (200, 500) according to claim 1, wherein said sectioning means (240) are housed in the reset device (200) and comprise input terminals (6, 7) connected to the power network (NW) and output terminals (8, 9) connected to the reset device (200) and control device (500); the control device having first terminals (1, 2) connected to the output terminals and second terminals (3, 4) connected to the electrical circuit (LD).

3. The apparatus (200, 500) according to claim 1, wherein the sectioning means (240) comprise a circuit-breaker suitable to section the power network and the reset and control devices.

4. The electrical apparatus (200, 500) according to claim 3, wherein said circuit-breaker suitable for the sectioning comprises fixed contacts (236) and moving contacts (237) to be manually opened and closed.

5. The apparatus (200, 500) according to claim 1, wherein the automatic actuating means (206) can be connected/disconnected to/from the power network (NW) by means of the sectioning means (240).

6. The apparatus (200, 500) according to claim 1, wherein said control device (500) includes control electronic means (50) to be connected to the electrical circuit (LD), in order to detect the operative condition thereof and activate a reset-enable signal (Sr) of the safety device if a failure condition of the electrical circuit is not detected following an automatic opening of the safety device.

7. The apparatus (200, 500) according to claim 6, wherein the control device (500) includes actuating means (62) such as to receive the reset-enable signal (Sr) and send an actuating signal (Srm) to the reset device , in order to cause the closure of the safety device (100).

8. The apparatus according to claim 6 or 7, wherein the control electronic means (50) are such that the reset-enable signal (Sr) is maintained deactivated if, following an automatic opening of the safety device, a failure condition of the electrical circuit (LD) is detected.

9. The apparatus (200, 500) according to claim 6, wherein the control electronic means (50) are such that, in case a failure has been detected, the reset-enable signal (Sr) is activated only when an opened signal (Sop) has been received from the reset device indicating that the safety device has been opened.

10. The apparatus according to claim 9, wherein the control electronic means (50) are such as to store a number and a respective time lapse of automatic opening events and consequent resetting of the safety device, and the reset-enable signal (Sr) is maintained deactivated when two of these events occur at a shorter time lapse than a preset time.

11. The apparatus (200, 500) according to claim 1, wherein, after the safety device has been manually opened by means of the cover (225), the cover is such as to be moved to close the sectioning means and allow the control device to be powered, such that an automatic closure of the device can be carried out by means of the reset device , with no failure being detected by the electrical circuit (LD).

12. The apparatus (200, 500) according to claim 1, wherein the control device (500) is housed in the first enclosure together with the reset device (200).

13. The apparatus (200, 500) according to claim 1, wherein the control device (500) is external to the first enclosure and is housed in an enclosure in common with the safety device.

14. The apparatus (200, 500) according to claim 1, wherein the control device (500) is housed in an enclosure of its own, separated from the reset device and safety device, and is provided with means (550,501) for reversibly fixing said control device enclosure to the safety device.

15. The apparatus (200, 500) according to claim 6, wherein said control electronic means (50) include a power supply device (53) provided with a safety transformer to insulate the electric circuit (LD) from the power network (NW).

16. The apparatus (200, 500) according to claim 6, wherein said control electronic means (50) comprise:
- a check electronic block (51) to carry out measurements of electrical parameters of said electrical circuit (LD),
- a central electronic block (52) to compare data corresponding to said electrical parameters with reference electrical parameters and generate the reset-enable signal (Sr).

17. The apparatus (200, 500) according to claim 1, wherein said reset device includes actuating means which include a release device (55, 58, 56, 60) to be mechanically connected to the safety device (100) to inhibit the manual switching of the same from the opened state to the closed state when said control device indicates that a failure condition of the electrical circuit has been detected.

18. The apparatus (200, 500) according to claim 16, wherein said electrical circuit (LD) is provided with at least one phase conductor (Lo), and a neutral conductor (No) and said check block (51) is such as to carry out at least one of the following measurements: a direct current measurement of the impedance between phase conductor and neutral conductor; an alternating current measurement of the impedance between said phase and neutral conductors and a ground circuit; a measurement of the ground leakage current.

19. The apparatus (200, 500) according to at least one of the preceding claims, wherein said central unit (52) is such as to perform the function of user interface and comprises a preferably serial, communication port (CP) for monitoring the state of the electrical circuit (LD) and exchanging information concerning said electrical parameters.

## Patentansprüche

1. Elektrische Vorrichtung (200, 500), welche einer Sicherheitsvorrichtung (100) zuordenbar ist, wobei die Sicherheitsvorrichtung dazu geeignet ist, geschlossen/geöffnet zu werden, um eine elektrische Schaltung (LD) mit bzw. von einem Stromnetzwerk (NW) zu verbinden bzw. zu trennen, wobei die elektrische Vorrichtung umfasst:
- eine Reset-Vorrichtung (200), welche mit dem Stromnetzwerk für das automatische Schließen der Sicherheitsvorrichtung (100) verbindbar ist,
- eine Regel-/Steuervorrichtung (500), welche durch das Stromnetzwerk mittels der Reset-Vorrichtung (200) versorgt wird und mit der elektrischen Schaltung (LD) verbunden ist, um einen Betriebszustand davon zu erfassen und die Reset-Vorrichtung zu regeln/steuern,
wobei die Reset-Vorrichtung (200) umfasst:
Unterteilungsmittel (240), welche während eines manuellen Öffnens der Sicherheitsvorrichtung (100) aktiviert werden können, um aus einer geschlossenen in eine geöffnete Konfiguration geschaltet zu werden, in welcher eine innere Ausrüstung der Reset-Vorrichtung und die Regel-/Steuervorrichtung von dem Stromnetzwerk getrennt werden,
eine Hülle (201) und eine isolierende Abdeckung (225), welche mit der Hülle (201) gekoppelt ist, um relativ zu der Hülle durch Gleiten zwischen einer ersten Position (1P) und einer zweiten Position (2P) manuell bewegt zu werden,
einen rotierenden Körper (234) und eine rotierende Stange (204), umfassend einen longitudinalen Kanal (205), in welchen ein erster Antriebshebel (112) der Sicherheitsvorrichtung (100) eingesetzt werden kann, so dass der erste Antriebshebel in der Rotation mit der Stange (204) integral ist,
automatische Betätigungsmittel (206), welche mit der Stange (204) für eine Rotation der Stange (204) gekoppelt sind, um die Sicherheitsvorrichtung (100) zu veranlassen, aus einem geöffneten Zustand und einem geschlossenen Zustand zu schalten;
wobei die isolierende Abdeckung (225) umfasst:
eine Tür (232), welche einen Zugriff auf die rotierende Stange (204) erlaubt, um die Stange manuell zu rotieren und die Sicherheitsvorrichtung (100) aus dem geöffneten in den geschlossenen Zustand zu bringen, wenn die isolierende Abdeckung in der ersten Position (1P) ist,
einen Vorsprung (233), welcher in eine Ausnehmung (235) des rotierenden Körpers (234) einzusetzen ist, wenn die isolierende Abdeckung (225) veranlasst wird, aus der ersten (1P) zu der zweiten (2P) Position zu gleiten, um die Rotation der Stange (204) in der entgegengesetzten Richtung zu verhindern, wobei der Vorsprung (233) von der Ausnehmung (235) außer Eingriff tritt, wenn die isolierende Abdeckung (225) veranlasst wird, aus der zweiten (2P) zu der ersten (1P) Position zu gleiten, so dass die rotierende Stange (204) durch die automatischen Betätigungsmittel rotiert werden kann, um die Sicherheitsvorrichtung zu schließen,
wobei die isolierende Abdeckung (225) mit einem Durchgangsloch (255) für ein Vorhängeschloss bereitgestellt ist, welches in der zweiten Position (2P) anzubringen ist, so dass nicht autorisierte Benutzer davon abgehalten werden, die isolierende Abdeckung (225) zu veranlassen zu der ersten Position (1P) zu gleiten.

2. Elektrische Vorrichtung (200, 500) nach Anspruch 1, wobei die Unterteilungsmittel (240) in der Reset-Vorrichtung (200) aufgenommen sind und Eingabeanschlüsse (6, 7), welche mit dem Stromnetzwerk (NW) verbunden sind, und Ausgabeanschlüsse (8, 9) umfassen, welche mit der Reset-Vorrichtung (200) und der Regel-/Steuervorrichtung (500) verbunden sind; die Regel-/Steuervorrichtung erste Anschlüsse (1, 2), welche mit den Ausgabeanschlüssen verbunden sind, und zweite Anschlüsse (3, 4) aufweist, welche mit der elektrischen Schaltung (LD) verbunden sind.

3. Vorrichtung (200, 500) nach Anspruch 1, wobei die Unterteilungsmittel (240) einen Schaltungsunterbrecher umfassen, welcher dazu geeignet ist, das Stromnetzwerk und die Reset- und Regel-/Steuervorrichtungen zu teilen.

4. Elektrische Vorrichtung (200, 500) nach Anspruch 3, wobei der Schaltungsunterbrecher, welcher für das Teilen geeignet ist, befestigte Kontakte (236) und bewegliche Kontakte (237) umfasst, um manuell geöffnet und geschlossen zu werden.

5. Vorrichtung (200, 500) nach Anspruch 1, wobei die automatischen Betätigungsmittel (206) mit/von dem Stromnetzwerk (NW) mittels der Unterteilungsmittel (240) verbunden/getrennt werden können.

6. Vorrichtung (200, 500) nach Anspruch 1, wobei die Regel-/Steuervorrichtung (500) elektronische Regel-/Steuermittel (50) umfasst, um mit der elektrischen Schaltung (LD) verbunden zu werden, um den Betriebszustand davon zu erfassen und ein Resetermöglichendes Signal (Sr) der Sicherheitsvorrichtung zu aktivieren, falls ein Fehlerzustand der elektrischen Schaltung nicht erfasst wird, einem automatischen Öffnen der Sicherheitsvorrichtung folgend.

7. Vorrichtung (200, 500) nach Anspruch 6, wobei die Regel-/Steuervorrichtung (500) Betätigungsmittel (62) umfasst, um das Reset-ermöglichende Signal (Sr) zu empfangen und ein Betätigungssignal (Srm) an die Reset-Vorrichtung zu senden, um das Schließen der Sicherheitsvorrichtung (100) zu veranlassen.

8. Vorrichtung nach Anspruch 6 oder 7, wobei die elektronischen Regel-/Steuermittel (50) derart sind, dass das Reset-ermöglichende Signal (Sr) deaktiviert gehalten wird, falls, einem automatischen Öffnen der Sicherheitsvorrichtung folgend, ein Fehlerzustand der elektrischen Schaltung (LD) erfasst wird.

9. Vorrichtung (200, 500) nach Anspruch 6, wobei die elektronischen Regel-/Steuermittel (50) derart sind, dass in einem Fall, in welchem ein Fehler erfasst worden ist, das Reset-ermöglichende Signal (Sr) nur aktiviert wird, wenn ein geöffnetes Signal (Sop) von der Reset-Vorrichtung empfangen worden ist, welches anzeigt, dass die Sicherheitsvorrichtung geöffnet worden ist.

10. Vorrichtung nach Anspruch 9, wobei die elektronischen Regel-/Steuermittel (50) derart sind, um eine Anzahl und eine jeweilige verstrichene Zeit von automatischen Öffnungsereignissen und einem nachfolgenden Reset der Sicherheitsvorrichtung zu speichern, und das Reset-ermöglichende Signal (Sr) deaktiviert gehalten wird, wenn zwei dieser Ereignisse zu einer kürzeren verstrichenen Zeit auftreten als eine voreingestellte Zeit.

11. Vorrichtung (200, 500) nach Anspruch 1, wobei, nachdem die Sicherheitsvorrichtung mittels der Abdeckung (225) manuell geöffnet worden ist, die Abdeckung derart ist, um bewegt zu werden, um die Unterteilungsmittel zu schließen und der Regel-/Steuervorrichtung zu erlauben, betrieben zu werden, so dass ein automatisches Schließen der Vorrichtung mittels der Reset-Vorrichtung ausgeführt werden kann, wobei kein Fehler durch die elektrische Schaltung (LD) erfasst wird.

12. Vorrichtung (200, 500) nach Anspruch 1, wobei die Regel-/Steuervorrichtung (500) in der ersten Hülle zusammen mit der Reset-Vorrichtung (200) aufgenommen ist.

13. Vorrichtung (200, 500) nach Anspruch 1, wobei die Regel-/Steuervorrichtung (500) zu der ersten Hülle extern ist und in einer Hülle gemeinsam mit der Sicherheitsvorrichtung aufgenommen ist.

14. Vorrichtung (200, 500) nach Anspruch 1, wobei die Regel-/Steuervorrichtung (500) in einer eigenen Hülle aufgenommen ist, welche von der Reset-Vorrichtung und der Sicherheitsvorrichtung getrennt ist, und mit Mitteln (550, 501) für ein reversibles Befestigen der Regel-/Steuervorrichtungs-Hülle mit der Sicherheitsvorrichtung bereitgestellt ist.

15. Vorrichtung (200, 500) nach Anspruch 6, wobei die elektronischen Regel-/Steuermittel (50) eine Stromversorgungsvorrichtung (53) umfassen, welche mit einem Sicherheitstransformator bereitgestellt ist, um die elektrische Schaltung (LD) von dem Stromnetzwerk (NW) zu isolieren.

16. Vorrichtung (200, 500) nach Anspruch 6, wobei die elektronischen Regel-/Steuermittel (50) umfassen:
- einen elektronischen Überprüfungsblock (51), um Messungen von elektrischen Parametern der elektrischen Schaltung (LD) auszuführen,
- einen elektronischen Zentralblock (52), um Daten, welche den elektrischen Parametern entsprechen, mit elektrischen Referenzparametern zu vergleichen und das Reset-ermöglichende Signal (Sr) zu erzeugen.

17. Vorrichtung (200, 500) nach Anspruch 1, wobei die Reset-Vorrichtung Betätigungsmittel umfasst, welche eine Freigabevorrichtung (55, 58, 56, 60) umfassen, welche mechanisch mit der Sicherheitsvorrichtung (100) zu verbinden ist, um das manuelle Schalten derselben von dem geöffneten Zustand in den geschlossenen Zustand zu verhindern, wenn die Regel-/Steuervorrichtung anzeigt, dass ein Fehlerzustand der elektrischen Schaltung erfasst worden ist.

18. Vorrichtung (200, 500) nach Anspruch 16, wobei die elektrische Schaltung (LD) mit wenigstens einem Phasenleiter (Lo) und einem neutralen Leiter (No) bereitgestellt ist und der Überprüfungsblock (51) derart ist, um wenigstens eine aus den folgenden Messungen auszuführen: eine Gleichstrommessung der Impedanz zwischen einem Phasenleiter und einem neutralen Leiter; eine Wechselstrommessung der Impedanz zwischen den Phasen- und neutralen Leitern und einer Erdungsschaltung; eine Messung des Erdungsleckagestroms.

19. Vorrichtung (200, 500) nach wenigstens einem der vorhergehenden Ansprüche, wobei die zentrale Einheit (52) derart ist, um die Funktion einer Benutzerschnittstelle durchzuführen und einen, vorzugsweise seriellen, Kommunikationsanschluss (CP) zum Überwachen des Zustands der elektrischen Schaltung (LD) umfasst und Austauschen von Informationen bezüglich der elektrischen Parameter.

## Revendications

1. Appareil électrique (200, 500) pouvant être associé à un dispositif de sécurité (100), ledit dispositif de sécurité étant adapté pour être fermé/ouvert pour connecter/déconnecter un circuit électrique (LD) à/d'un réseau électrique (NW), respectivement, l'appareil électrique comprenant :
un dispositif de réenclenchement (200) pouvant être connecté au réseau électrique pour la fermeture automatique du dispositif de sécurité (100),
un dispositif de commande (500) alimenté par ledit réseau électrique au moyen du dispositif de réenclenchement (200) et connecté audit circuit électrique (LD) afin de détecter un état opérationnel de celui-ci et de commander le dispositif de réenclenchement,
le dispositif de réenclenchement (200) comprenant :
des moyens de coupure (240) qui peuvent être activés pendant une ouverture manuelle du dispositif de sécurité (100) pour être commutés d'une configuration fermée à ouverte, dans laquelle un équipement intérieur du dispositif de réenclenchement et le dispositif de commande sont déconnectés du réseau électrique,
une enceinte (201) et un couvercle isolant (225) couplé à l'enceinte (201) de façon à être déplacé manuellement par rapport à l'enceinte en coulissant entre une première position (1P) et une seconde position (2P),
un corps rotatif (234) et une barre rotative (204) incluant un canal longitudinal (205) dans lequel un premier levier d'entraînement (112) du dispositif de sécurité (100) peut être inséré de sorte que le premier levier d'entraînement soit solidaire en rotation avec la barre (204),
des moyens d'actionnement automatiques (206) couplés à la barre (204) pour faire tourner la barre (204) afin d'amener le dispositif de sécurité (100) à commuter d'un état ouvert à un état fermé ;
le couvercle isolant (225) comprend :
une porte (232) qui permet d'accéder à la barre rotative (204) afin de faire tourner manuellement la barre et d'amener le dispositif de sécurité (100) de l'état ouvert à l'état fermé, lorsque le couvercle isolant est dans la première position (1P),
une saillie (233) devant être insérée dans une fente (235) du corps rotatif (234), lorsque le couvercle isolant (225) est amené à coulisser de la première (1P) à la seconde (2P) position, pour empêcher la rotation de la barre (204) dans la direction opposée, ladite saillie (233) étant libérée de la fente (235) lorsque le couvercle isolant (225) est amené à coulisser de la seconde (2P) à la première (1P) position, de sorte que la barre rotative (204) puisse être mise en rotation par les moyens d'actionnement automatiques pour fermer le dispositif de sécurité,
dans lequel le couvercle isolant (225) est muni d'un trou traversant (255) pour qu'un cadenas puisse être appliqué dans la seconde position (2P), de façon à ce que des utilisateurs non autorisés soient empêchés d'amener le couvercle isolant (225) à coulisser vers la première position (1P).

2. Appareil électrique (200, 500) selon la revendication 1, dans lequel lesdits moyens de coupure (240) sont contenus dans le dispositif de réenclenchement (200) et comprennent des bornes d'entrée (6, 7) connectées au réseau électrique (NW) et des bornes de sortie (8, 9) connectées au dispositif de réenclenchement (200) et au dispositif de commande (500) ; le dispositif de commande ayant des premières bornes (1, 2) connectées aux bornes de sortie et des secondes bornes (3, 4) connectées au circuit électrique (LD).

3. Appareil (200, 500) selon la revendication 1, dans lequel les moyens de coupure (240) comprennent un disjoncteur adapté pour couper le réseau électrique et les dispositifs de réenclenchement et de commande.

4. Appareil électrique (200, 500) selon la revendication 3, dans lequel ledit disjoncteur adapté pour la coupure comprend des contacts fixes (236) et des contacts mobiles (237) destinés à être ouverts et fermés manuellement.

5. Appareil (200, 500) selon la revendication 1, dans lequel les moyens d'actionnement automatiques (206) peuvent être connectés/déconnectés au/du réseau électrique (NW) au moyen des moyens de coupure (240).

6. Appareil (200, 500) selon la revendication 1, dans lequel ledit dispositif de commande (500) inclut des moyens électroniques de commande (50) destinés à être connectés au circuit électrique (LD), afin de détecter l'état opérationnel de celui-ci et d'activer un signal d'activation du réenclenchement (Sr) du dispositif de sécurité si un état de défaillance du circuit électrique n'est pas détecté à la suite d'une ouverture automatique du dispositif de sécurité.

7. Appareil (200, 500) selon la revendication 6, dans lequel le dispositif de commande (500) inclut des moyens d'actionnement (62) conçus pour recevoir le signal d'activation du réenclenchement (Sr) et envoyer un signal d'actionnement (Srm) au dispositif de réenclenchement, afin d'entraîner la fermeture du dispositif de sécurité (100).

8. Appareil selon la revendication 6 ou 7, dans lequel les moyens électroniques de commande (50) sont tels que le signal d'activation du réenclenchement (Sr) est maintenu désactivé si, à la suite d'une ouverture automatique du dispositif de sécurité, un état de défaillance du circuit électrique (LD) est détecté.

9. Appareil (200, 500) selon la revendication 6, dans lequel les moyens électroniques de commande (50) sont tels que, dans le cas où une défaillance a été détectée, le signal d'activation du réenclenchement (Sr) est activé seulement lorsqu'un signal ouvert (Sop) a été reçu à partir du dispositif de réenclenchement indiquant que le dispositif de sécurité a été ouvert.

10. Appareil selon la revendication 9, dans lequel les moyens électroniques de commande (50) sont conçus pour stocker un nombre et un intervalle de temps respectif d'événements d'ouverture automatique et de réenclenchement consécutif du dispositif de sécurité, et le signal d'activation du réenclenchement (Sr) est maintenu désactivé lorsque deux de ces événements surviennent à un intervalle de temps plus bref qu'une durée prédéterminée.

11. Appareil (200, 500) selon la revendication 1, dans lequel, après que le dispositif de sécurité a été ouvert manuellement au moyen du couvercle (225), le couvercle est conçu pour être déplacé pour fermer les moyens de coupure et permettre au dispositif de commande d'être alimenté, de sorte qu'une fermeture automatique du dispositif puisse être effectuée au moyen du dispositif de réenclenchement, sans qu'aucune défaillance soit détectée par le circuit électrique (LD).

12. Appareil (200, 500) selon la revendication 1, dans lequel le dispositif de commande (500) est contenu dans la première enceinte en même temps que le dispositif de réenclenchement (200).

13. Appareil (200, 500) selon la revendication 1, dans lequel le dispositif de commande (500) est extérieur à la première enceinte et est contenu dans une enceinte en commun avec le dispositif de sécurité.

14. Appareil (200, 500) selon la revendication 1, dans lequel le dispositif de commande (500) est contenu dans une enceinte distincte, séparée du dispositif de réenclenchement et du dispositif de sécurité, et est doté de moyens (550, 501) pour fixer de manière réversible ladite enceinte du dispositif de commande au dispositif de sécurité.

15. Appareil (200, 500) selon la revendication 6, dans lequel lesdits moyens électroniques de commande (50) incluent un dispositif d'alimentation électrique (53) doté d'un transformateur de sécurité pour isoler le circuit électrique (LD) du réseau électrique (NW).

16. Appareil (200, 500) selon la revendication 6, dans lequel lesdits moyens électroniques de commande (50) comprennent :
un bloc électronique de vérification (51) pour effectuer des mesures de paramètres électriques dudit circuit électrique (LD),
un bloc électronique central (52) pour comparer des données correspondant auxdits paramètres électriques avec des paramètres électriques de référence et générer le signal d'activation du réenclenchement (Sr).

17. Appareil (200, 500) selon la revendication 1, dans lequel ledit dispositif de réenclenchement inclut des moyens d'actionnement qui incluent un dispositif de déclenchement (55, 58, 56, 60) destiné à être connecté mécaniquement au dispositif de sécurité (100) pour empêcher la commutation manuelle de celui-ci de l'état ouvert à l'état fermé lorsque ledit dispositif de commande indique qu'un état de défaillance du circuit électrique a été détecté.

18. Appareil (200, 500) selon la revendication 16, dans lequel ledit circuit électrique (LD) est doté d'au moins un conducteur de phase (Lo) et d'un conducteur de neutre (No) et ledit bloc de vérification (51) est conçu pour effectuer au moins une des mesures suivantes : une mesure en courant continu de l'impédance entre le conducteur de phase et le conducteur de neutre ; une mesure en courant alternatif de l'impédance entre lesdits conducteurs de phase et de neutre et un circuit de masse ; une mesure du courant de fuite à la masse.

19. Appareil (200, 500) selon au moins une des revendications précédentes, dans lequel ladite unité centrale (52) est conçue pour remplir la fonction d'interface utilisateur et comprend un port de communication de préférence série (CP) pour contrôler l'état du circuit électrique (LD) et échanger des informations concernant lesdits paramètres électriques.
